# EUROPEAN PATENT SPECIFICATION

(11) **EP 3 934 937 B1**
(45) Date of publication and mention of the grant of the patent: **07.06.2023**
(21) Application number: 20720500.6
(22) Date of filing: 06.03.2020
(51) Int. Cl.: B60R 11/04

(54) **PERISCOPE FOR VEHICLES, IN PARTICULAR FOR CARS**
PERISKOP FÜR FAHRZEUGE, INSBESONDERE FÜR KRAFTFAHRZEUGE
PÉRISCOPE POUR DES VÉHICULES, EN PARTICULIER POUR DES VOITURES

(30) Priority: 06.03.2019 IT 201900003233; 06.09.2019 IT 201900015782
(43) Date of publication of application: 12.01.2022
(73) Proprietor: Dall'Oglio, Giampiero, 20123 Milano (IT)
(72) Inventor: Dall'Oglio, Giampiero, 20123 Milano (IT)
(74) Representative: Iannone, Carlo Luigi
(86) International application number: PCT/IB2020/051944
(87) International publication number: WO 2020/178790

(56) References cited:
- WO-A1-2014/137242
- CN-A- 102 951 091
- DE-A1- 3 900 667
- US-B1- 6 384 741
- US-B1- 8 137 008

## Description

The present invention relates to a periscope for vehicles, in particular for cars, as well as to a vehicle comprising this periscope.

Visibility from the external environment is a very important element when driving a vehicle. Driving safety depends on driving visibility.

There are currently multiple devices for increasing and improving visibility in the automotive sector. DE3900667A1 is considered to be the closest prior art document disclosing a periscope according to the preamble of claim 1.

The most commonly known, as well as an integral part of the vehicles, are the rear view mirrors, which however only contribute to the visibility of the environment behind the vehicle, with respect to the direction of travel. The same limitation applies to rear view cameras which improve the driver's visibility only when the vehicle is reversing.

Currently some vehicles are equipped with additional sensors that indicate the presence of obstacles or other vehicles in the vicinity of the vehicle, both during maneuvers and during normal driving.

In particular, there are sensors placed on the front of the vehicle and able to keep under control the distance with other vehicles or obstacles that precede it, so as to warn the driver when the distance is reduced below considered safe limits.

However, although all the above devices improve the driving conditions of the vehicle and therefore the driving safety, none of the aforementioned devices allows to increase the visibility from the passenger compartment of the vehicle so as to allow the driver to see beyond other vehicles or obstacles that are immediately in front of the driven vehicle.

Often, in fact, vehicles immediately in front of the driven vehicle drastically limit visibility from the passenger compartment of the vehicle in the direction of travel. This drastically reduces the driver's response time, for example when a sudden slowdown occurs involving vehicles not immediately in front of the driver's vehicle and only with a certain delay the vehicle immediately in front of the driver's vehicle.

The aim of the present invention is to provide a periscope for vehicles which solves the technical problem described above, avoiding the drawbacks and overcomes the limits of the prior art, allowing to increase the driving visibility so as to have an excellent perception of what is happening beyond the vehicle or obstacle immediately in front of the driven vehicle.

Within the scope of this aim, an object of the present invention is to provide a periscope for vehicles that is not bulky and very practical in use.

A further object of the invention is to provide a periscope for vehicles which is capable of giving the widest guarantees of reliability and safety in use.

Another object of the invention is to provide a periscope for vehicles which is easy to manufacture and economically competitive when compared to the prior art.

The aforementioned aim, as well as the aforementioned purposes and the others which will become better apparent hereinafter, are achieved by a periscope for vehicles as described in claim 1.

Other features are provided in the dependent claims.

Further characteristics and advantages will become clearer from the description of the preferred but not exclusive embodiments of a periscope for vehicles, illustrated only by way of non-limitative example with the aid of the accompanying drawings, in which:
Figure 1 is a side view of a first embodiment of a periscope for vehicles applied to a car;
Figure 2 is a side view of a second embodiment of a periscope
Figure 3 is a side view of a third embodiment of a periscope
Figure 4 is a side view of a periscope according to the invention;
Figure 5 is a perspective view of figure 4.

With reference to the aforementioned figures, the periscope for vehicles, indicated globally with the reference number 10, comprises a video camera 2 associated with a first end 5 of a rod 1, while a second end 5 'of this rod 1, opposite to said first end 5, is configured to be associated with a roof T of a vehicle V, in at least one configuration of use of the periscope 10. The camera 2 is positioned at a height greater than or equal to 30 cm with respect to the roof T of the vehicle V and is adapted to detect a plurality of images of the space in front of the vehicle V in its direction of travel.

Furthermore, the periscope 10 comprises displaying means 8 of the plurality of images detectable by the camera 2, and transmission means 7 of this plurality of images from the camera 2 to the displaying means 8. In particular, these displaying means 8 can be placed inside a passenger compartment A of vehicle V to be viewed by a driver of vehicle V.

The camera 2 can advantageously be a camera with a wide angle lens to allow a greater increase in visibility for the driver, also on the sides.

In one of the embodiments of the periscope 10, the rod 1 comprises fixing means 14 of the second end 5 'of the rod 1 to the roof T of the vehicle V, such as for example a suction cup or a magnet.

Advantageously, these fixing means 14 can comprise supporting means 3 rigidly fixed to the roof T of the vehicle V, and therefore already arranged on the vehicle. The second end 5 'of the rod 1 can instead comprise connection means 4 complementary to the supporting means 3 for the fixed or removable connection of the rod 1 to the supporting means 3.

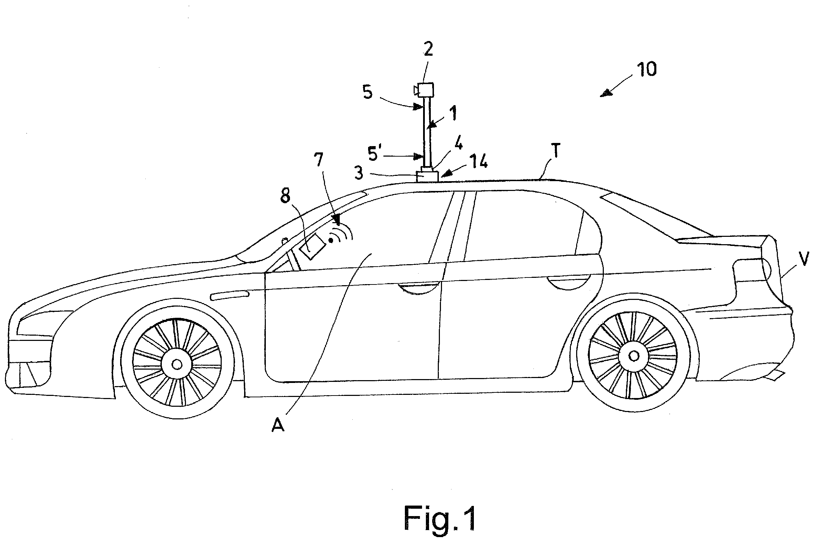

An example of such a configuration is shown in figure 1.

According to the first embodiment of the periscope 10, a bush can therefore be provided on a magnetic support, or a sucker with a fixing screw to support the rod with a micro-camera; or a bush attached to the car roof or a small bayonet joint.

Advantageously the rod 1 can be movable from a configuration of use of the periscope 10 in which the video camera 2 is positioned at a height greater than or equal to 30 cm with respect to the roof T of the vehicle V, to a rest configuration in which the video camera 2 is substantially lowered at the level of the roof T of the vehicle V, and vice versa.

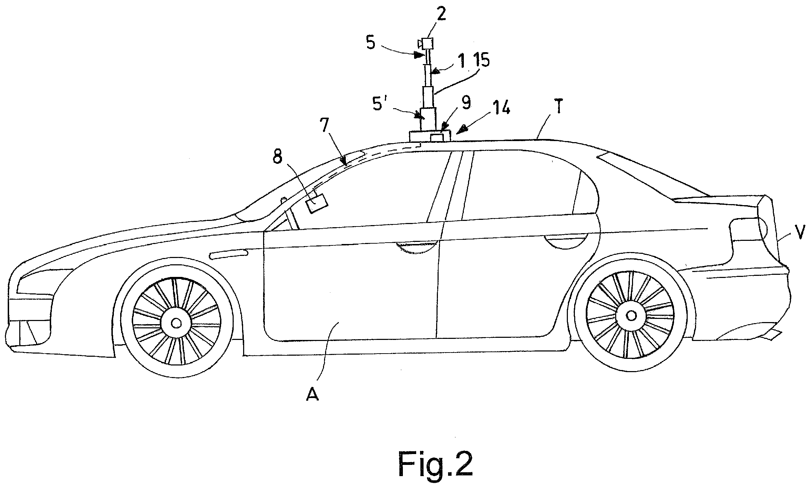

For example, this mobility feature of the camera can be obtained through a telescopic rod 15, as shown in figure 2. In this case, therefore, the support of the camera 2 can be raised as desired.

In these embodiments, the periscope for vehicles 10 is fixed, i.e. it is put in the position of use by the user and remains so until possible manual disassembly.

Alternatively, the supporting means 3 and the connection means 4 can be mutually associated to each other by means of a hinge constraint 16. This hinge constraint being movable by 90° between two stop positions at 0° and 90° with respect to the roof T of vehicle V.

In this case, the user can raise the rod 1 to arrange the periscope 10 in the configuration of use. Advantageously, the rod 1 can be lowered in the rest configuration, for example in the event of a stop, or even removed from the roof T at the end of a journey.

The hinge constraint 16 can be defined by a hinge with a 90° movement placed on a support to be applied on the car.

The removal of the periscope 10 from the vehicle V allows the periscope 10 to be kept in safer places to reduce its damage caused by external conditions.

A specific example of an embodiment of the periscope 10 provides a rod with a camera on a free pin 0° -90° but with stops on a closed or open position. The camera (fixed or removable) will be powered by its own battery or by the car and will send the images (wiring or wi-fi or wireless) to a monitor (of the camera itself, a mobile phone, integrated into the car).

Advantageously, the periscope 10 comprises means 9 for moving the rod 1 which are adapted to allow the passage from the configuration of use of the periscope 10 in which the video camera 2 is positioned at a height greater than or equal to 30 cm with respect to the roof T of the vehicle V, to the rest configuration in which the camera 2 is lowered substantially at the level of the roof T of the vehicle V and vice versa.

Said moving means 9 can comprise an electric actuator, such as for example a servo motor actuator apparatus, or a motor with worm screw.

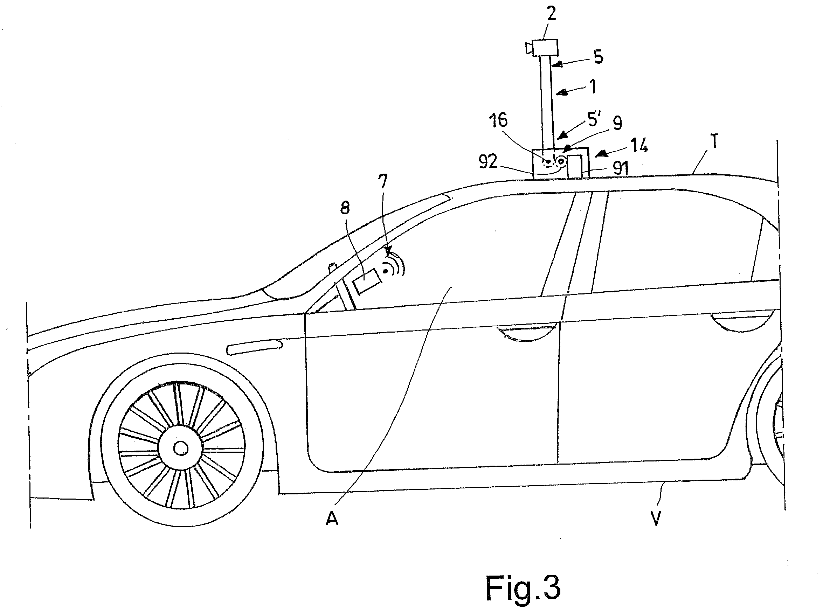

In one embodiment, these moving means 9 are coupled to the hinge constraint 16 so as to allow the movement of the rod 1 from 0° to 90°, and vice versa. Figure 3 illustrates a periscope for cars 10 comprising a hinge constraint 16 coupled to movement means 9, in particular an actuator 91 and a toothed wheel 92 which transmits the motion from the actuator 91 to the second end 5', preferably also toothed, of rod 1.

In fact, an example of the embodiment of the periscope 10 provides a 10x10mm type hinge with a 90° movement placed on a support to be applied to the car. This hinge will house a rod with micro cameras and will be controlled by a motor which will move the rod with a worm screw applied to the hinge.

Furthermore, these electric handling means 9 can be coupled to the telescopic coupling, as illustrated in figure 2, so that it can be lengthened and shortened, in an automated manner. In particular, these moving means 9 can comprise an electric actuator adapted to raise the telescopic rod 15.

Advantageously, the moving means 9 can be controlled remotely, for example by the driver inside the vehicle V both while driving, in the event of obstacles such as low bridges, and before departure.

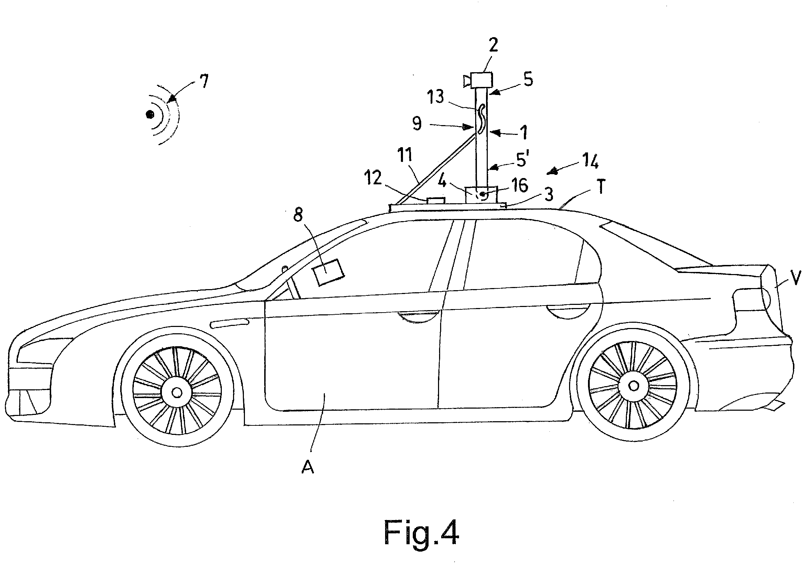

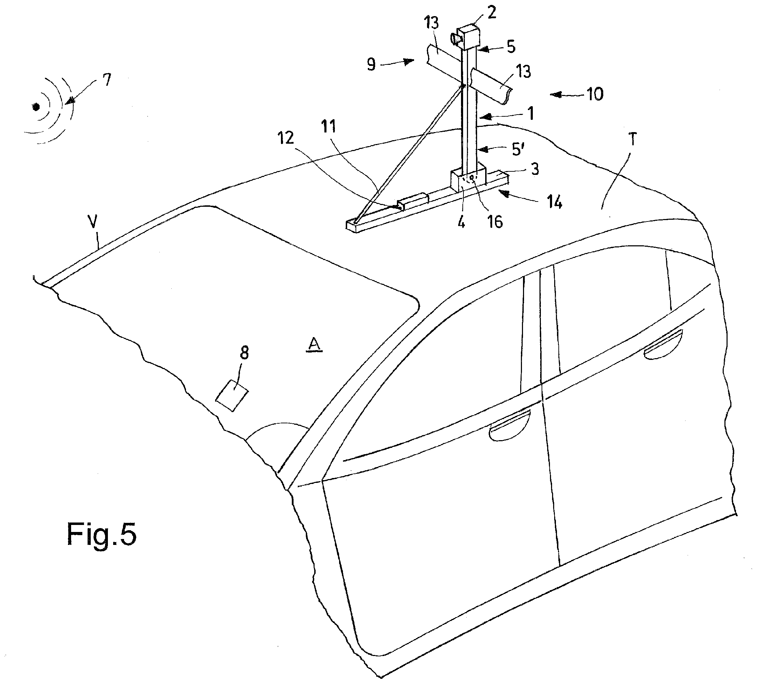

According to the invention, as illustrated in figures 4 and 5, the moving means 9 comprise one or two wings 13 fixed to the rod 1 near the first end 5, suitable for intercepting the air flow generated by the movement of the vehicle V in the direction of travel to raise the rod 1 from the rest configuration to the configuration of use of the periscope 10.

Advantageously, these wings 13 are made of a flexible elastic material so as to adapt its deformation to the speed of the air flow that is intercepted by it, so as not to oppose excessive resistance at high speeds of the vehicle V.

Advantageously, this embodiment includes a cushioning system 11, 12 for lifting the rod 1 in the configuration of use and lowering the rod 1 in the rest configuration.

In particular, the cushioning system 11, 12 comprises an elastic cable 11 adapted to cushion the lifting of the rod 1 and a small pillow 12 which can be fixed to the roof T of the vehicle V, adapted to cushion the lowering of the rod 1 when said rod 1 returns in rest position on roof T.

An example of a specific embodiment of the periscope 10 foresees a rod with micro-camera on pin with free movement of 90° with possible stops at 0° or 90°. In this case the rod will be lifted by the air flow as the vehicle advances. The rod will have in the free front part a fin keyed appropriately for lifting to the air flow. By increasing the motion, the support will rise on the hinge until the stop that will be reduced. By decreasing the speed up to the stop, the support will also go down, reduced at the final stop.

Advantageously, the displaying means 8 can comprise a monitor integrated into the vehicle V, or a screen of a portable device that can be positioned by the driver inside the passenger compartment A of the vehicle V.

In fact, advantageously, the periscope for cars 1 can be sold integrated into the vehicle or separately to be mounted on the vehicle, and therefore equipped with a special screen or the option to be integrated into the user's smartphone.

For example, the periscope for cars can be associated with a smartphone by means of software or an application from which it is possible to view the images obtained from the periscope but also to operate it.

Advantageously, this allows multiple smartphones to be associated with the same periscope, such as that of a passenger. This feature is advantageous in that a driver does not have the possibility of operating a smartphone while driving.

Advantageously, the transmission means 7 comprise cable transmission means, or wireless transmission means of the WLAN (wireless local area network) type or of the PAN (Personal Area Network) type.

For example, the embodiments illustrated in figures 1 and 3 comprise transmission means of the PAN type, such as for example Bluetooth transmission means. In the embodiment of Figure 2, data transmission takes place via cable. In the embodiment of figures 4 and 5 the periscope 10 uses WLAN type transmission means.

Advantageously, the rod 1 has a length ranging from 30 to 120 cm, so that a micro camera or camera will be placed above the car at a height that can vary from 30 to 120 cm. Rod 1 can be of various materials such as wood, plastic or metal.

The invention also relates to a vehicle V, comprising a periscope 10 as described.

Furthermore, the power supply means of the periscope 10 for vehicles can be a battery, rechargeable, integrated into the camera 2 and removable to be recharged, either independently or by removing the camera 2 itself.

Alternatively, the camera 2 is powered by the battery of the vehicle V via integrated connection cables.

Advantageously, the camera 2 can be a stereoscopic type camera. For example, camera 2 can be equipped with two objectives. The stereoscopic camera 2 is advantageously configured to detect distances with respect to the obstacles placed in front of the vehicle and to display said distances on the displaying means 8.

The operation of the periscope for cars 10 is clear and evident from what has been described.

In practice, it has been found that the periscope for vehicles, according to the present invention, fulfills the intended aim and purposes as it allows the driver to have excellent visibility even beyond the car or obstacle that precedes it.

Another advantage of the vehicle periscope, as found, is to increase the safety of driving when overtaking, crossing, queuing or other situations of potential danger to road safety.

A further advantage of the periscope for vehicles, according to the invention is allowing the driver to perceive traffic situations or accidents significantly in advance.

The periscope for vehicles thus conceived is susceptible of numerous modifications and variations, all of which are within the scope of the inventive concept.

In practice, the materials used, so long as they are compatible with the specific use, as well as the contingent shapes and dimensions, is possible depending on the needs.

## Claims

1. Periscope (10) for vehicles, in particular for cars, comprising a camera (2) associated with a first end (5) of a rod (1), a second end (5') of said rod (1), opposite to said first end (5), being configured to be associated with a roof (T) of a vehicle (V), in at least one configuration of use of said periscope (10), said camera (2) being positioned at a height greater than or equal to 30 cm with respect to said roof (T) of said vehicle (V) and being adapted to detect a plurality of images of the space in front of said vehicle (V) in the direction of travel of said vehicle (V), said periscope (10) further comprising displaying means (8) of said plurality of images detectable by said camera (2), and transmission means (7) of said plurality of images from said camera (2) to said displaying means (8), said displaying means (8) being placeable inside a passenger compartment (A) of said vehicle (V) in order to be viewed by a driver of said vehicle (V); said rod (1) being movable by a configuration of use of said periscope (10) in which said camera (2) is positioned at said height greater than or equal to 30 cm with respect to said roof (T) of said vehicle (V), to a rest configuration in which said camera (2) is lowered substantially at the level of said roof (T) of said vehicle (V), said periscope (10) comprising moving means (9) of said rod (1) from said configuration of use of said periscope (10) to said rest configuration and vice versa; **characterised in that** the moving means (9) comprise one or two wings (13) fixed to said rod (1) near said first end (5), adapted to intercept the air flow generated by the movement of said vehicle (V) in said direction of travel to lift said rod (1) from said rest configuration to said configuration of use of said periscope (10).

2. Periscope (10) for vehicles according to claim 1, **characterized in that** said rod (1) comprises fixing means (14) of said second end (5') of said rod (1) to said roof (T) of said vehicle (V).

3. Periscope (10) for vehicles according to claim 2, **characterized in that** said fixing means (14) comprise supporting means (3) rigidly fixable to said roof (T) of said vehicle (V), said second end (5') of said rod (1) further comprising connection means (4) complementary to said supporting means (3) for the connection, fixed or removable, of said rod (1) to said supporting means (3).

4. Periscope (10) for vehicles according to one or more of the preceding claims, **characterized in that** said rod (1) is a telescopic rod (15).

5. Periscope (10) for vehicles according to one or more of the preceding claims, **characterized in that** said supporting means (3) and said connection means (4) are reciprocally associated by means of a hinged connection (16) .

6. Periscope (10) for vehicles according to one or more of the preceding claims, **characterized in that** said moving means (9) comprise an electric actuator.

7. Periscope (10) for vehicles, according to one or more of the preceding claims, **characterized in that** it comprises a cushioning system (11, 12) for raising said rod (1) in said configuration of use and for lowering said rod (1) in said rest configuration.

8. Periscope (10) for vehicles, according to claims 5 and 7, **characterized in that** said cushioning system (11, 12) comprises an elastic cable (11) adapted to cushion the lifting of said rod (1) and a small pillow (12) fixable to said roof (T) of said vehicle (V) adapted to cushion the lowering of said rod (1) when said rod (1) returns to the rest position on said roof (T).

9. Periscope (10) for vehicles, according to one or more of the preceding claims, **characterized in that** said displaying means (8) comprise a monitor integrated into the vehicle (V), or a screen of a portable device that can be positioned by the driver at the interior of said passenger compartment (A).

10. Periscope (10) for vehicles, according to one or more of the preceding claims, **characterized in that** said transmission means (7) comprise cable transmission means, or wireless transmission means of the WLAN (wireless local area network) type or of the PAN (Personal Area Network) type.

11. Periscope (10) for vehicles, according to one or more of the preceding claims, **characterized in that** said camera (2) is of the stereoscopic type and is configured to detect distances from the obstacles placed in front of said vehicle (V) and to display said distances on said displaying means (8).

12. Vehicle (V), **characterized in that** it comprises a periscope (10) according to one or more of the preceding claims.

## Patentansprüche

1. Periskop (10) für Fahrzeuge, insbesondere für Kraftfahrzeuge, mit einer Kamera (2), die mit einem ersten Ende (5) einer Stange (1) verbunden ist, wobei ein zweites Ende (5') der Stange (1), das dem ersten Ende (5) gegenüberliegt, so konfiguriert ist, dass es mit einem Dach (T) eines Fahrzeugs (V) verbunden werden kann, und zwar in mindestens einer Benutzungskonfiguration des Periskops (10), wobei die Kamera (2) in einer Höhe von mehr als oder gleich 30 cm in Bezug auf das Dach (T) des Fahrzeugs (V) positioniert ist und geeignet ist, eine Vielzahl von Bildern des Raums vor dem Fahrzeug (V) in der Fahrtrichtung des Fahrzeugs (V) zu erfassen, wobei das Periskop (10) ferner Anzeigemittel (8) für die Vielzahl der von der Kamera (2) erfassbaren Bilder und Übertragungsmittel (7) für die Vielzahl von Bildern von der Kamera (2) zu den Anzeigemitteln (8) umfasst, wobei die Anzeigemittel (8) in einem Fahrgastraum (A) des Fahrzeugs (V) angeordnet werden können, um von einem Fahrer des Fahrzeugs (V) betrachtet zu werden; wobei die Stange (1) durch eine Benutzungskonfiguration des Periskops (10), in der die Kamera (2) in der Höhe von mehr als oder gleich 30 cm in Bezug auf das Dach (T) des Fahrzeugs (V) positioniert ist, in eine Ruhekonfiguration bewegbar ist, in der die Kamera (2) im Wesentlichen auf das Niveau des Dachs (T) des Fahrzeugs (V) abgesenkt ist, wobei das Periskop (10) Bewegungsmittel (9) der Stange (1) von der Benutzungskonfiguration des Periskops (10) in die Ruhekonfiguration und umgekehrt umfasst; **dadurch gekennzeichnet, dass** die Bewegungsmittel (9) einen oder zwei Flügel (13) umfassen, die an der Stange (1) in der Nähe des ersten Endes (5) befestigt sind und dazu geeignet sind, den durch die Bewegung des Fahrzeugs (V) in der Fahrtrichtung erzeugten Luftstrom abzufangen, um die Stange (1) aus der Ruhekonfiguration in die Benutzungskonfiguration des Periskops (10) anzuheben.

2. Periskop (10) für Fahrzeuge nach Anspruch 1, **dadurch gekennzeichnet, dass** die Stange (1) Befestigungsmittel (14) des zweiten Endes (5') der Stange (1) an dem Dach (T) des Fahrzeugs (V) umfasst.

3. Periskop (10) für Fahrzeuge nach Anspruch 2, **dadurch gekennzeichnet, dass** die Befestigungsmittel (14) Stützmittel (3) umfassen, die starr an dem Dach (T) des Fahrzeugs (V) befestigbar sind, wobei das zweite Ende (5') der Stange (1) ferner zu den Stützmitteln (3) komplementäre Verbindungsmittel (4) für die feste oder lösbare Verbindung der Stange (1) mit den Stützmitteln (3) umfasst.

4. Periskop (10) für Fahrzeuge nach einem oder mehreren der vorstehenden Ansprüche, **dadurch gekennzeichnet, dass** die Stange (1) eine Teleskopstange (15) ist.

5. Periskop (10) für Fahrzeuge nach einem oder mehreren der vorstehenden Ansprüche, **dadurch gekennzeichnet, dass** die Stützmittel (3) und die Verbindungsmittel (4) mittels einer Scharnierverbindung (16) gegenseitig zugeordnet sind.

6. Periskop (10) für Fahrzeuge nach einem oder mehreren der vorstehenden Ansprüche, **dadurch gekennzeichnet, dass** die Bewegungsmittel (9) einen elektrischen Aktor umfassen.

7. Periskop (10) für Fahrzeuge nach einem oder mehreren der vorstehenden Ansprüche, **dadurch gekennzeichnet, dass** es ein Dämpfungssystem (11, 12) zum Anheben der Stange (1) in die Benutzungskonfiguration und zum Absenken der Stange (1) in die Ruhekonfiguration umfasst.

8. Periskop (10) für Fahrzeuge nach den Ansprüchen 5 und 7, **dadurch gekennzeichnet, dass** das Dämpfungssystem (11, 12) ein elastisches Kabel (11), das dazu geeignet ist, das Anheben der Stange (1) abzufedern, und ein kleines Kissen (12) umfasst, das an dem Dach (T) des Fahrzeugs (V) befestigbar ist und dazu geeignet ist, das Absenken der Stange (1) abzufedern, wenn die Stange (1) in die Ruheposition auf dem Dach (T) zurückkehrt.

9. Periskop (10) für Fahrzeuge nach einem oder mehreren der vorstehenden Ansprüche, **dadurch gekennzeichnet, dass** die Anzeigemittel (8) einen in das Fahrzeug (V) integrierten Monitor oder einen Bildschirm einer tragbaren Vorrichtung umfassen, die vom Fahrer im Inneren des Fahrgastraums (A) positioniert werden kann.

10. Periskop (10) für Fahrzeuge nach einem oder mehreren der vorstehenden Ansprüche, **dadurch gekennzeichnet, dass** die Übertragungsmittel (7) Kabelübertragungsmittel oder drahtlose Übertragungsmittel vom Typ WLAN (Wireless Local Area Network) oder vom Typ PAN (Personal Area Network) umfassen.

11. Periskop (10) für Fahrzeuge nach einem oder mehreren der vorstehenden Ansprüche, **dadurch gekennzeichnet, dass** die Kamera (2) vom stereoskopischen Typ ist und so konfiguriert ist, dass sie Abstände zu den vor dem Fahrzeug (V) befindlichen Hindernissen erfasst und diese Abstände auf den Anzeigemitteln (8) anzeigt.

12. Fahrzeug (V), **dadurch gekennzeichnet, dass** es ein Periskop (10) nach einem oder mehreren der vorstehenden Ansprüche umfasst.

## Revendications

1. Périscope (10) pour véhicules, notamment pour automobiles, comprenant une caméra (2) associée à une première extrémité (5) d'une tige (1), une seconde extrémité (5') de ladite tige (1), opposée à ladite première extrémité (5), étant configurée pour être associée à un toit (T) d'un véhicule (V), dans au moins une configuration d'utilisation dudit périscope (10), ladite caméra (2) étant positionnée à une hauteur supérieure ou égale à 30 cm par rapport audit toit (T) dudit véhicule (V) et étant adaptée pour détecter une pluralité d'images de l'espace situé devant ledit véhicule (V) dans le sens de déplacement dudit véhicule (V), ledit périscope (10) comprenant en outre des moyens d'affichage (8) de ladite pluralité d'images détectables par ladite caméra (2), et des moyens de transmission (7) de ladite pluralité d'images de ladite caméra (2) auxdits moyens d'affichage (8), lesdits moyens d'affichage (8) pouvant être placés à l'intérieur d'un habitacle (A) dudit véhicule (V) afin d'être vus par un conducteur dudit véhicule (V) ; ladite tige (1) étant mobile d'une configuration d'utilisation dudit périscope (10) dans laquelle ladite caméra (2) est positionnée à ladite hauteur supérieure ou égale à 30 cm par rapport audit toit (T) dudit véhicule (V), à une configuration de repos dans laquelle ladite caméra (2) est abaissée sensiblement au niveau dudit toit (T) dudit véhicule (V), ledit périscope (10) comprenant des moyens de déplacement (9) de ladite tige (1) de ladite configuration d'utilisation dudit périscope (10) à ladite configuration de repos et vice-versa ; **caractérisé en ce que** les moyens de déplacement (9) comprennent une ou deux ailes (13) fixées à ladite tige (1) à proximité de ladite première extrémité (5), aptes à intercepter le flux d'air généré par le déplacement dudit véhicule (V) dans ledit sens de déplacement pour soulever ladite tige (1) de ladite configuration de repos à ladite configuration d'utilisation dudit périscope (10).

2. Périscope (10) pour véhicules selon la revendication 1, **caractérisé en ce que** ladite tige (1) comprend des moyens de fixation (14) de ladite seconde extrémité (5') de ladite tige (1) audit toit (T) dudit véhicule (V).

3. Périscope (10) pour véhicules selon la revendication 2, **caractérisé en ce que** lesdits moyens de fixation (14) comprennent des moyens de support (3) pouvant être fixés rigidement audit toit (T) dudit véhicule (V), ladite seconde extrémité (5') de ladite tige (1) comprenant en outre des moyens de connexion (4) complémentaires auxdits moyens de support (3) pour la connexion, fixe ou amovible, de ladite tige (1) auxdits moyens de support (3).

4. Périscope (10) pour véhicules selon une ou plusieurs des revendications précédentes, **caractérisé en ce que** ladite tige (1) est une tige télescopique (15).

5. Périscope (10) pour véhicules selon une ou plusieurs des revendications précédentes, **caractérisé en ce que** lesdits moyens de support (3) et lesdits moyens de liaison (4) sont associés réciproquement au moyen d'une liaison articulée (16).

6. Périscope (10) pour véhicules selon une ou plusieurs des revendications précédentes, **caractérisé en ce que** lesdits moyens de déplacement (9) comprennent un actionneur électrique.

7. Périscope (10) pour véhicules, selon une ou plusieurs des revendications précédentes, **caractérisé en ce qu'**il comprend un système d'amortissement (11, 12) pour soulever ladite tige (1) dans ladite configuration d'utilisation et pour abaisser ladite tige (1) dans ladite configuration de repos.

8. Périscope (10) pour véhicules, selon les revendications 5 et 7, **caractérisé en ce que** ledit système d'amortissement (11, 12) comprend un câble élastique (11) adapté pour amortir le soulèvement de ladite tige (1) et un petit coussin (12) pouvant être fixé audit toit (T) dudit véhicule (V), adapté pour amortir l'abaissement de ladite tige (1) lorsque ladite tige (1) revient dans la position de repos sur ledit toit (T).

9. Périscope (10) pour véhicules, selon une ou plusieurs des revendications précédentes, **caractérisé en ce que** lesdits moyens d'affichage (8) comprennent un moniteur intégré au véhicule (V), ou un écran d'un dispositif portable qui peut être positionné par le conducteur à l'intérieur dudit habitacle (A).

10. Périscope (10) pour véhicules, selon une ou plusieurs des revendications précédentes, **caractérisé en ce que** lesdits moyens de transmission (7) comprennent des moyens de transmission par câble, ou des moyens de transmission sans fil du type WLAN (réseau local sans fil) ou du type PAN (réseau personnel).

11. Périscope (10) pour véhicules, selon une ou plusieurs des revendications précédentes, **caractérisé en ce que** ladite caméra (2) est du type stéréoscopique et est configurée pour détecter des distances par rapport aux obstacles situés devant ledit véhicule (V) et pour afficher lesdites distances sur lesdits moyens d'affichage (8).

12. Véhicule (V), **caractérisé en ce qu'**il comprend un périscope (10) selon une ou plusieurs des revendications précédentes.
